Europäisches Patentamt

European Patent Office

Office européen des brevets

(11) Veröffentlichungsnummer: **0 280 248**
**A1**

(12) **EUROPÄISCHE PATENTANMELDUNG**

(21) Anmeldenummer: **88102611.6**

(22) Anmeldetag: **23.02.88**

(51) Int. Cl.⁴ **B65D 81/20** , A23B 7/148

(30) Priorität: **27.02.87 DE 3706317**

(43) Veröffentlichungstag der Anmeldung:
**31.08.88 Patentblatt 88/35**

(84) Benannte Vertragsstaaten:
**AT BE CH DE ES FR GB IT LI NL SE**

(71) Anmelder: **Ott, Rolf**
**Wilhelmstrasse 15**
**D-2152 Horneburg(DE)**

(72) Erfinder: **Ott, Rolf**
**Wilhelmstrasse 15**
**D-2152 Horneburg(DE)**

(74) Vertreter: **UEXKÜLL & STOLBERG**
**Patentanwälte**
**Beselerstrasse 4**
**D-2000 Hamburg 52(DE)**

(54) Verpackungseinheit sowie Verfahren zum Konservieren von frisch geschälten Kartoffeln.

(57) Es wird eine Verpackungseinheit aus einem luftdichten Behältnis und darin eingebrachten, frisch geschälten Kartoffeln vorgeschlagen, wobei das Behältnis mit einer Mischung aus 50 bis 70 Vol.% Kohlendioxid und 50 bis 30 Vol.% Stickstoff gefüllt ist. Die Erfindung beruht auf der Erkenntnis, daß frisch geschälte Kartoffeln, die gewöhnlich sehr - schlecht haltbar sind und einem raschen Verderb unterliegen, in dieser Atmosphäre aus Kohlendioxid und Stickstoff eine stark verbesserte Haltbarkeit zeigen. Dementsprechend betrifft die Erfindung außerdem ein Verfahren zum Konservieren und Lagern von frisch geschälten Kartoffeln, bei dem die Kartoffeln in ein Behältnis eingebracht werden, die in diesem Behältnis vorhandene Luft durch eine Mischung aus 50 bis 70 Vol.% Kohlendioxid und 50 bis 30 Vol.% Stickstoff ersetzt wird und das Behältnis dann verschlossen wird. Auf diese Weise können frisch geschälte Kartoffeln über 12 bis 14 Tage gelagert werden, ohne an Frische zu verlieren.

EP 0 280 248 A1

# Verpackungseinheit sowie Verfahren zum Konservieren von frisch geschälten Kartoffeln

Die Erfindung betrifft eine Verpackungseinheit aus einem luftdichten Behältnis und darin eingebrachten, frisch geschälten Kartoffeln sowie ein Verfahren zum Konservieren und Lagern von frisch geschälten Kartoffeln.

Insbesondere in Gastronomiebetrieben werden große Mengen geschälter Kartoffeln verarbeitet. Da es für diese Betriebe häufig einen zu großen apparativen und personellen Aufwand darstellt, diese Kartoffeln jeweils selbst vorzubereiten, erfolgt die Herstellung heutzutage in großem Ausmaß in dafür spezialisierten Betrieben. Diese liefern die Kartoffeln, nachdem sie in bekannter Weise geschält worden sind, an die weiterverarbeitenden Gastronomiebetriebe.

Sofern keine Konservierungsmittel verwendet werden, sind frisch geschälte Kartoffeln allerdings - schlecht haltbar und unterliegen einem raschen Verderb. Eine kurzfristige Lagerung und Konservierung erfolgt deshalb in der Weise, daß die geschälten Kartoffeln in Wasser eingebracht und in dieser Form an die weiterverarbeitenden Gastronomiebetriebe geliefert werden. Alternativ werden die geschälten Kartoffeln in Vakuumverpackungen verpackt und ausgeliefert. Die kurze Haltbarkeit der geschälten Kartoffeln macht es aber erforderlich, daß die weiterverarbeitenden Gastronomiebetriebe praktisch täglich beliefert werden müssen, unabhängig von den von diesen Betrieben tatsächlich benötigten Kartoffelmengen. Dies erfordert einen hohen Organisations-und Transportaufwand, der mit erheblichen Kosten verbunden ist. Außerdem ist der abnehmende Gastronomiebetrieb gezwungen, die gekauften Kartoffeln in kürzester Zeit zu verarbeiten. Da dies nicht immer möglich ist, ist es unvermeidbar, daß ein erheblicher Anteil der gelieferten Kartoffeln verdirbt und deshalb verworfen werden muß.

Der Erfindung liegt deshalb die Aufgabe zugrunde, diese Nachteile des Standes der Technik zu überwinden und eine Verpackungseinheit sowie ein Verfahren vorzuschlagen, die eine längere Konservierung und Lagerung von frisch geschälten Kartoffeln erlauben.

Zur Lösung dieser Aufgabe wird eine Verpackungseinheit der eingangs genannten Art vorgeschlagen, die dadurch gekennzeichnet ist, daß das Behältnis mit einer Mischung aus 50 bis 70 Vol.% Kohlendioxid und 50 bis 30 Vol.% Stickstoff gefüllt ist. Ferner wird erfindungsgemäß zur Lösung dieser Aufgabe ein Verfahren zum Konservieren und Lagern von frisch geschälten Kartoffeln vorgeschlagen, das dadurch gekennzeichnet ist, daß man geschälte Kartoffeln in ein Behältnis, vorzugsweise einem Kunststoffbeutel, einbringt, die in diesem Behältnis vorhandene Luft durch eine Mischung aus 50 bis 70 Vol.% Kohlendioxid und 50 bis 30 Vol.% Stickstoff ersetzt und das Behältnis dann verschließt.

Die Zubereitung der erfindungsgemäß zu verpackenden Kartoffeln erfolgt in bekannter Weise, d.h. die Kartoffeln werden geschält, was regelmäßig maschinell erfolgt. Nach dem Schälen durchlaufen die Kartoffeln üblicherweise ein Wasserbad und müssen dann auf einem Abtropfband gut abtropfen. Es ist erwünscht, daß die Kartoffeln so trocken wie möglich sind. Anschließend werden sie bei einer Eigentemperatur von etwa 6 bis 8°C in ein luftdichtes Behältnis gefüllt. Hierfür eignen sich alle Verpackungsmittel, die im wesentlichen sauerstoffundurchlässig sind, wie Kunststoffbeutel, Beutel aus Alufolie, Dosen, Glasbehälter usw. Wegen der leichten Handhabbarkeit sind in der Praxis im wesentlichen sauerstoffundurchlässige Kunststoffbeutel bevorzugt. Selbstverständlich kann man aber auch im Rahmen des erfindungsgemäßen Verfahren sehr viel größere Behältnisse wie Container und Lagerräume mit der erfindungsgemäß zu verwendenden Gasmischung füllen und so die Kartoffeln bis zu ihrem tatsächlichen Versand aufbewahren. Diese Verfahrensweise ist allerdings nicht bevorzugt, da sie verhältnismäßig aufwendig ist und dennoch häufig eine Abpackung in Form der erfindungsgemäßen Verpackungseinheit vor der Auslieferung an den Kunden erforderlich sein wird.

Nach dem Einbringen der Kartoffeln in das jeweils gewählte Behältnis wird die Luft in diesem Behältnis durch eine Mischung aus 50 bis 70 Vol.% Kohlendioxid und 50 bis 30 Vol.% Stickstoff ersetzt. Dies erfolgt vorzugsweise durch ausreichend lange Spülung mit der Mischung aus Kohlendioxid und Stickstoff. Selbstverständlich kann man auch zunächst die Luft durch Anlegung eines Vakuums aus dem Behältnis entfernen und dann die Mischung aus Kohlendioxid und Stickstoff einfüllen. Um allerdings eine möglichst vollständige Entfernung der Luft sicherzustellen, muß diese Verfahrensweise gewöhnlich ein-oder mehrmals wiederholt werden.

Die erfindungsgemäß verwendete Gasmischung besteht gewöhnlich aus 50 bis 70 Vol% Kohlendioxid und 50 bis 30 Vol% Stickstoff, vorzugsweise 58 bis 65 Vol% Kohlendioxid und 42 bis 35 Vol% Stickstoff und insbesondere 61,5 Vol% Kohlendioxid und 38,5 Vol% Stickstoff.

Sowie sichergesellt ist, daß die Luft möglichst vollständig aus dem die Kartoffeln enthaltenden Behältnis verdrängt ist, wird das Behältnis verschlossen. Bei Verwendung von Kunststoffbeuteln erfolgt dies beispielsweise durch Versiegelung.

Wenn man allerdings das erfindungsgemäße Verfahren unter Verwendung sehr großer Behältnisse durchführt, so ist es selbstverständlich auch möglich, daß man dem Behältnis nach Entfernung der Luft ständig weitere geringe Mengen der erfindungsgemäßen verwendeten Gasmischung zuführt, so daß das Behältnis unter einem leichten Überdruck steht und dadurch das Eindringen von Luft bzw. Sauerstoff von außen verhindert wird.

Es hat sich herausgestellt, daß die frisch geschälten Kartoffeln in der erfindungsgemäßen Verpackungseinheit bzw. bei der Behandlung nach dem erfindungsgemäßen Verfahren sehr viel länger haltbar sind als es bei der bisherigen Einbringung in Wasser oder der Verpackung in Vakuumverpackungen möglich war. Insbesondere bei Kühlung auf Temperaturen von 2 bis 4°C können Haltbarkeiten von 12 bis 14 Tagen gewährleistet werden. Im Vergleich zu der Haltbarkeit der Kartoffeln in den genannten herkömmlichen Verpackungen von nur 4 bis 5 Tagen stellt dies einen enormen Vorteil dar, da der Erzeuger nicht täglich, sondern nur wöchentlich oder zweiwöchentlich ausliefern muß und dem Verarbeiter ein größerer Verarbeitungszeitraum zur Verfügung steht, so daß weniger Abfall durch Verderb entsteht. Hinzu kommt, daß bei Verwendung von flexiblen Behältnissen (z.B. Kunststoffbeuteln), wie sie bei den herkömmlichen Vakuumverpackungen regelmäßig verwendet werden, kein Druck auf die Kartoffeln durch die Behältniswände ausgeübt wird. Dadurch werden anders als bei der herkömmlichen Vakuumverpackung Porenbeschädigungen an der Kartoffeloberfläche bzw. Druckstellen vermieden, d.h. die erfindungsgemäße Verpackungseinheit liefert ein qualitativ hochwertigeres Produkt. Im Vergleich zu der Lagerung und Versendung von Kartoffeln in Wasser hat die erfindungsgemäße Verpackungseinheit natürlich den Vorteil, daß sie eine Trockenverpackung ist und folglich eine sehr viel einfachere Handhabung gestattet. Schließlich besteht ein großer Vorzug der Erfindung auch darin, daß keine grundsätzlich unerwünschten Konservierungsmittel zum Einsatz kommen bzw. die Versuchung zur Verwendung derartiger Mittel beseitigt bzw. zumindest stark verringert ist.

Beispiel:

In herkömmlicher Weise maschinell geschälte Kartoffeln wurden auf einem Abtropfband gut abtropfen gelassen und anschließend bei einer Eigentemperatur von etwa 7°C in Kunststoffbeutel gefüllt. Die Luft in den Kunststoffbeuteln wurde durch Spülen durch eine Gasmischung aus 61,5 Vol% Kohlendioxid und 38,5 Vol% Stickstoff ersetzt. Nachdem davon ausgegangen werden konnte, daß alle Luft aus den Kunststoffbeuteln verdrängt war, wurden diese verschweißt. Die so verpackten Kartoffeln wurden bei einer Temperatur von 3°C ± 1°C gelagert und täglich auf ihren Zustand hin überprüft. Auch nach 2 Wochen konnte noch keine Geruchsentwicklung oder Geschmacksveränderung festgestellt werden. Vielmehr blieben die Kartoffeln völlig frisch, als wenn sie gerade geschält worden wären.

Die Ergebnisse dieser Geruchs-und Geschmacksprüfungen wurden auch durch Untersuchungen in einem lebensmittelchemischen Labor nach 2-wöchiger Lagerung bestätigt. Die chemischen Untersuchungen ergaben keinerlei Qualitätsbeeinträchtigung der gelagerten Kartoffeln.

## Ansprüche

1. Verpackungseinheit aus einem luftdichten Behältnis und darin eingebrachten, frisch geschälten Kartoffeln, dadurch gekennzeichnet, daß das Behältnis mit einer Mischung aus 50 bis 70 Vol.% Kohlendioxid und 50 bs 30 % Stickstoff gefüllt ist.

2. Verpackungseinheit nach Abspruch 1, dadurch gekennzeichnet, daß die Mischung aus 48 bis 65 Vol% Kohlendioxid und 42 bis 35 Vol% Stickstoff besteht.

3. Verpackungseinheit nach Arspruch 2, dadurch gekennzeichnet, daß die Mischung aus 61,5 Vol% Kohlendioxid und 38,5 Vol% Stickstoff besteht.

4. Verpackungseinheit nach einem der Ansprüche 1 bis 3, dadurch gekennzeichnet, daß das Behältnis ein Kunststoffbeutel ist.

5. Verfahren zum Konservieren und Lagern von frisch geschälten Kartoffeln, dadurch gekennzeichnet, daß man geschälte Kartoffeln in ein Behältnis, vorzugsweise einen Kunststoffbeutel, einbringt, die in diesem Behältnis vorhandene Luft durch eine Mischung aus 50 bis 70 Vol.% Kohlendioxid und 50 bis 30 Vol.%Stickstoff ersetzt und das Behältnis dann verschließt.

6. Verfahren nach Anspruch 5, dadurch gekennzeichnet, daß man eine Mischung aus 58 bis 65 Vol% Kohlendioxid und 42 bis 35 Vol% Stickstoff verwendet.

7. Verfahren nach Anspruch 5, dadurch gekennzeichnet, daß man eine Mischung aus 61,5 Vol% Kohlendixoid und 38,5 Vol% Stickstoff verwendet.

| Europäisches Patentamt | EUROPÄISCHER RECHERCHENBERICHT | Nummer der Anmeldung |
| --- | --- | --- |
| | | EP 88 10 2611 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| --- | --- | --- | --- |
| X | EP-A-0 164 285 (BONNINGUE) * Seite 2, Zeilen 4-16; Seite 3, Zeilen 17-35; Ansprüche 1, 3, 4, 5, 7, 8, 9 * --- | 1-3,5-7 | B 65 D 81/20 A 23 B 7/148 |
| X | EP-A-0 153 215 (L'AIR LIQUIDE) * Seite 2, Zeile 29 - Seite 3, Zeile 35; Ansprüche 1, 5 * --- | 1,4,5 | |
| X | US-A-3 610 516 (ESTY) * Spalte 1, Zeile 73 - Spalte 2, Zeile 3; Spalte 2, Zeilen 22-39 * --- | 1,4 | |
| A | DE-A-3 140 337 (TYCZKA) * Ansprüche 1, 4, 6; Seite 5, Zeilen 23-29; Seite 10, Zeilen 6-20 * ----- | 1-7 | |

**RECHERCHIERTE SACHGEBIETE (Int. Cl.4)**

B 65 D 81/00
A 23 B 7/00
A 23 L 3/00

Der vorliegende Recherchenbericht wurde für alle Patentansprüche erstellt

| Recherchenort | Abschlußdatum der Recherche | Prüfer |
| --- | --- | --- |
| BERLIN | 19-05-1988 | NOVELLI B. |